# EUROPEAN PATENT SPECIFICATION

(11) **EP 1 613 175 B1**
(45) Date of publication and mention of the grant of the patent: **11.05.2011**
(21) Application number: 04723676.5
(22) Date of filing: 26.03.2004
(51) Int. Cl.: A23L 1/0524, A23J 1/00, C08L 89/00, A23C 1/16, A23C 9/00

(54) **PROTEIN POWDER COMPOSITION**
PROTEINPULVERZUSAMMENSETZUNG
COMPOSITION PULVERULENTE PROTEIQUE

(30) Priority: 01.04.2003 SE 0300949
(43) Date of publication of application: 11.01.2006
(73) Proprietor: DANISCO A/S, 1001 Copenhagen K. (DK)
(72) Inventor: CROFSKEY, Glen, Auckland, Papatoetoe (NZ); LARSEN, Gorm, Castlecrag, NSW 2068 (AU); OLSEN, Soren, DK-8300 Odder (DK)
(74) Representative: Inspicos A/S
(86) International application number: PCT/IB2004/001067
(87) International publication number: WO 2004/086879

(56) References cited:
- EP-A1- 1 338 210
- US-A- 4 391 830
- US-B1- 6 221 419

## Description

### FIELD OF INVENTION

The invention relates to a protein powder composition wherein the powder composition can be reconstituted to form a protein containing liquid with an increased stability, said powder composition comprising from about 3 to about 30 % (weight/weight) pectin of the protein content, preferably the pectin is adsorbed to a protein base, the pectin having a degree of esterification ≥ 50%. The invention also relates to a process for the production of said powder composition and use thereof.

### BACKGROUND OF INVENTION

Today, there is an increasing need for protein powder compositions, which easily may be added or mixed with a liquid such as water to produce a protein containing liquid, such as a protein containing liquid for human consumption, such as a protein drink. One of the reasons is the transportation cost associated with heavy liquid compositions which is space demanding. Another reason is the demand by the consumers which desires to in an easy and fast way be able to prepare a drink, such as a nutritional drink which in fast way may be consumed.

A general phenomenon occurring for protein drinks such as milk drinks at a pH lower than 5.0 is sedimentation of proteins, which become insoluble at pH close to their iso-electric point. This phenomenon is amplified when heat treatment at a temperature above 70 °C is applied to the product in order to reduce microbial activity and increase shelf life.

In order to prevent sedimentation, which may be considered as undesirable, manufactures can among other techniques use addition of high ester pectin to the product at appropriate dosing. Stabilisation through the use of high ester pectin is for example described in the GRINDSTED® PECTIN AMD, Protein stabiliser for acidified beverages, A User's Guide, Danisco PB 2001-3e, with description of different types of pectin and indications concerning the optimal dosing of pectin in products. One very important point when stabilising protein drinks such as acidified drinks including milk drinks with high ester pectin is to apply a strong mechanical treatment, typically a homogenisation treatment at a pressure of 50 bar to 150 bar or more. For example Glahn et al., Conference Proceedings, London, October 1994, p 252 - 256, Food Ingredients Europe, Publisher: Process Press Europe, Maarssen, show that when applying a homogenisation treatment of 50 bar to 150 bar to a yoghurt drink stabilised with pectin after a heat treatment at 70 °C for 10 min, the minimum concentration required for optimal stability is reduced from 0.4 % (by weight) to less than 0.2 % of the final product. Simultaneously, viscosity of the yoghurt drink is dramatically reduced. The stabilisation effect of pectin is explained by an electro-static adsorption of pectin molecules at the surface of casein micelles or other protein aggregates, which hinders agglomeration of protein particles in large aggregates.

Thereby, stabilisation by pectin of protein containing liquids, such as protein containing liquids for human consumption with a low pH, for example acidifed drinks, differs from stabilisation by other types of stabilisers, such as hydrocolloid gums like for example carboxy-methyl cellulose, locust bean gum, carraghenans or xanthan. These stabilisers ensure stability by increasing the viscosity of the drink, and therefore prevent or slow down sedimentation of insoluble particles such as proteins. EP 1338210 discloses a powder composition a protein base and a high methoxyl pectin.

In US 4.289.789 an instant yoghurt drink composition is disclosed in which the yoghurt drink composition comprises a thickener to stabilise the drink, the thickener and a hydrocolloid gum. The thickener may be carboxy methyl cellulose or cold water soluble gum. Stabilisation is thus obtained by increased viscosity of the yoghurt drink. Prior art does not offer the solution for the stabilisation of protein in drinks such as acidified drinks having a low viscosity.

Today, there is no process available to produce a protein powder composition comprising a protein base such as yoghurt and pectin, which enables the possibility to dissolve the powder composition into a liquid, where the liquid composition remains homogenous without increase of viscosity, without sedimentation during the shelf life. Thereby, there is a need to invent such a process and such a new protein powder composition to fulfil the above mentioned demands.

### SUMMARY OF THE INVENTION

The application relates to an improved protein powder composition, which may be reconstituted to form a protein containing liquid. The liquid has an increased stability, such as a reduction of sedimentation during storage. Additionally the liquid remains homogenous and the viscosity, low and stable. The protein liquid may be liquid for human consumption such as a soup, a dressing a sport drink, nutritional drink, dietetic drink or therapeutic drink.

Accordingly, in a first aspect the invention relates to a protein powder composition comprising from 3 to 30 % pectin (weight/weight of the protein content), the pectin having a degree of esterification ≥ 50%.

In another aspect the invention elates to a protein liquid reconstituted from the protein powder composition, the protein liquid being selected from the group consisting of soups, dressings, milk drinks, milk juice drinks, buttermilk drinks, sour cream drinks, whey juice drinks, oat drinks, juice drinks and soya drinks or a combination thereof.

In a further aspect the invention relates to a process for the preparation of a protein powder composition which can be reconstituted to form a protein containing liquid comprising the steps of; providing at least one pectin source, providing at least one protein base, mixing said pectin source(s) with said protein source(s) to produce a protein powder composition, homogenising said protein powder composition and drying said protein powder composition.

The invention also relates to the use of the protein powder composition according to the invention.

Such an improved protein powder composition provides upon dispersion in a liquid, such as water and without any following homogenisation treatment a homogenous protein containing liquid, in which the proteins of the protein base are stable during storage.

### DETAILED DESCRIPTION OF THE INVENTION

The term " increased stability" is intended to mean that the protein containing liquid remains in a homogenous stage after dispersion in a liquid such as water, without sedimentation of the proteins adsorbed to pectin or changes in viscosity of the protein containing liquid during storage..

The term "pectin" is intended to mean a pectin product obtained by separation of pectin from a plant material. The pectin staring material can preferably be obtained from citrus fruits, apples, sugar beets, sunflower heads, vegetables or waste products from plants such as apples, sugar beet, sun flower or citrus fruits. Examples of citrus fruits are limes, lemons, grapefruits, and oranges. Pectin is a structural polysaccharide commonly found in the form of protopectin in plant cell walls. Pectin comprises α-1-4 linked galacturonic acid residues which are interrupted with a small number of 1,2 linked α-L-rhamnose units. In addition, pectin comprises highly branched regions with an almost alternating rhamno-galacturonan chain. These highly branched regions also contain other sugar units (such as D-galactose, L-arabinose and xylose) attached by glycosidic linkages to the C3 or C4 atoms of the rhamnose units or the C2 or C3 atoms of the galacturonic acid units. The long chains of α-1-4 linked galacturonic acid residues are commonly referred to as "smooth regions", whereas the highly branched regions are commonly referred to as the "hairy regions".

The term "degree of esterification" is intended to mean the extent to which free carboxylic acid groups contained in the polygalacturonic acid chain of pectin have been esterified (eg., by methylation) or in other ways rendered non-acidic ( eg., by amidation). If 50% or more of the carboxyl groups are esterified then the resultant pectin is referred to as a "high ester pectin" If the pectin does not contain any - or only a few - esterified groups it is usually referred to as pectic acid.The structure of pectin, in particular the degree of esterification, dictates many of its physical and/or chemical properties.

The term "adsorbed" is intended to mean that the pectin particles are bound by chemical interactions to the surface of the protein particles.

The term "low viscosity" is intended to mean a liquid having a viscosity value equal to or below 50 mPa·s (milli-Pascal . second) for a protein such as 25 mPa·s for a drinking yogurt with 8% by weight of MSNF, measured by a LVT Brookfiled® viscosimeter at 30 rpm with S 160 spindle.

### Description of the protein powder composition

The invention relates to an improved protein powder composition, wherein the protein powder composition may be reconstituted to form a protein containing liquid with increased stability. The protein containing liquid may be a drink. The protein base may be any suitable protein base, which needs to be stabilised to minimise sedimentation of the proteins later on in the protein containing liquid. This may be achieved by the adsorption of pectin to the proteins within the protein base by a suitable method such as the method described below. The improved protein powder composition has a pH, which is below 7, such as from about 3.0 to about 7.0 or has a pH below 5.0 such as from about 3.0 to 4.8, such as 3.5 to about 4.5. Measurement of pH is performed on a 10% (by weight) solution of powder in water.

The reconstituted liquid remains homogenous during storage. The viscosity remains low and stable and limited amounts of sedimentation of the proteins within the liqiud occur. The improvement with the invention is that the stability of a reconstituted liquid according to the invention will be significantly improved due to the addition of pectin prior to drying of the composition.

The invention relates to a protein powder composition, wherein the powder composition comprises from 3 to 30 % pectin (weight/weight of the protein content, protein base) or from about 5 to about 15 % pectin (weight/weight of the protein content) adsorbed to a protein base. The pectin having a degree of esterification ≥ 50 %, such as ≥ 60 % or such as ≥ 70 %. The pectin may be any suitable pectin such as the high ester pectin .Grindsted ® AMD 700 ranges, for example AMD 783, obtained from Danisco A/S, DK-8220 Brabrand, Denmark.. In a specific embodiment sucrose can be used to help dispersing the pectin in the composition.

According to another embodiment, the protein powder composition comprises at least one additive selected from the group consisting of sugars, sweeteners, flavours, colouring agents, bacterial cultures, fruit, fruit juices or organic acids, minerals or vitamines.

Examples of sugar additives are glucose, sucrose and fructose or a mixture thereof. The sugar or sugars may be added in an amount of from 0.1 to 15 % (weight /weight). However, artificial sweeteners, may partly or completely replace the sugars.

Examples of bacterial cultures, which may be added, are probiotic bacterial cultures or other bacterial cultures, which may influence the taste and aroma of the reconstituted drink. Examples of bacterial cultures are Lactobacilli.

Example of fruit and fruit juices are both natural and synthetic, which may be selected depending on the desired final taste of the drink. Examples of fruit or fruit juices are orange, black cherry, papaya, mango, grape, cranberry, lemon, lemon-lime, grapefruit. Accordingly one ore more vegetable extracts may be added, such as carrot extracts.

Example of organic acids are ascorbic, acetic, fumaric, malic, lactic, tartaric, citric, succinic, oxalic or phosphoric acid. Accidification may also be achieved by using a starter culture, which may be a bacterial or a yeast starter culture, such as *L.acidophilus, L.bulgaricus, B.bifida, S.thermophilus* or Kloeckera.

The selection of one or more additives depends on the final drink and the criteria the drink need to fulfil, such as having a certain taste, colour, smell, nutritional value etc.

Another advantage with the present invention is that no additional thickener needs to be added to obtain a stable drink having a viscosity equal to or below 50 mPAs at a 3% protein concentration or equal to or below 25 mPAs at a 3% protein concentration. Omitting an additional thickener makes it easier to spray dry and mix the powder composition.

According to a specific embodiment the invention relates to an acidified milk drink or acidified milk juice drink, where acidification of the protein base is obtained by addition of one or more organic acids such as for example citric acid, lactic acid, fruit, vegetable extracts, or fermented whey. The organic acid(s) are added prior to the production of the powder.

Suitable protein bases for the protein liquid are animal protein or plant proteins such are those present within the group consisting of meats, milks, juices, soyas, oats, wheys, rices, walnuts, peanuts, coconuts, yoghurts or a combination thereof. For example when the protein base is yoghurt the yoghurt may be prepared according to Tamine et al., 1985, Yoghurt science and technology, Pergamon press. The addition of pectin gives the possibility to ensure stability without raising the viscosity. Elimination of thickeners also makes it easier to spray dry the protein powder composition.

The reconstituted protein liquid may be selected from the group consisting of milk drinks, milk juice drinks, buttermilk drinks, whey juice drinks, oat drinks, juice drinks and soya drinks or a combination thereof. The protein liquid may be a high, medium, low or non-fat protein drink. The formed protein drink may easily be prepared by the addition of a liquid such as water, juice or milk or another liquid (sparkling or non-sparkling) and agitated to form the drink. The agitation can be performed at a speed of approximately 1500 rpm or more. This may be achieved by for example a SILVERSON® L 4 R, rotating speed range of 500 to 10 000 rpm. The protein drink may be a protein drinks for kids, infants, old people and people who build up their muscles.

### Description of the process for the preparation of the protein powder composition

The present invention also relates to a process for the preparation of a protein powder composition. The protein powder composition is described above.

The process comprises the steps of providing at least one pectin source and at least one protein base, which are mixed to produce a protein powder composition. The pectin(s) may be blended with another components such as sucrose prior to being added to the protein(s). The protein powder composition may be dry or liquid. If the protein powder composition is dry, a liquid such as water or milk is admixed. The protein powder composition is subjected to a homogenisation step and a following drying step to provide the protein powder composition of the invention.

According to one embodiment the invention relates to a process, wherein pectin is added to the protein base in an amount from about 3 to about 30 % pectin by weight of the protein content or from about 5 to about 15 % by weight of the protein content. The pectins are adsorbed to the proteins within the protein base during the homogenisation process and thereby hinder the proteins later on to sediment within a liquid.

The process includes a step of homogenisation. The homogenisation may be performed, with a high-shear liquid blender, such as for example SILVERSON® 4 L R, or a high-pressure homogeniser such as described in Dairy Processing Handbook, Tetra Pak Processing System Publisher, pages 116 - 118. High-pressure system is preferable, with pressures of 10 MPa, preferably 20 MPa, applied in one or two stages, preferably but not essentialy at a temperature above 50°C. Advantageously, homogenisation may occur simultaneously with the drying step by spraying the composition through the nozzle of a spray drier.

Additionally, the process includes a step of drying, the drying may be freeze-drying, fluid bed drying, spray-drying or drum-drying or a combination thereof. Drying processes are described in Razik et al., Yoghurt: scientific grounds, technology, manufacture and preparations, P293-296. Technical Dairy Publishing House, 1978. However, for certain embodiments spray-drying are to be preferred. The drying is performed to achieve a protein powder composition, which at least has a dry content of 85%, such as 90%. Dry matter should be sufficient for ensuring conservation of the protein powder composition and avoiding spoilage by microorganisms under storage.

The process includes a protein base, such as the protein base described above for the protein powder composition.

The protein powder composition produced (formed) by the process may be reconstituted into a protein containing liquid, such as the protein containing liquid described above.

### EXAMPLES

### EXAMPLE 1

102 g of high ester Grindsted® AMD 783 were dry-blended together with 510 g of sucrose and added to 1500 g water at 80°C. 20 kg of non-fat yoghurt base of 14.5% solid content was blended with this preparation under high agitation. The yoghurt base was prepared by fermenting concentrated milk to a pH of 4.3 by means of a yogurt culture containing strains of Lactobacillus bulgaricum and Streptococcus thermophilus. The pectin containing yoghurt base was homogenised in a 2-step homogeniser at 72 bar and 36 bar. The homogenised pectin containing yoghurt base was then spray dried in a conventional spray dryer with an inlet temperature of 235 °C and an outlet temperature of 85-90 °C, to a total solid content of 90%.

### EXAMPLE 2

### 1. Test sample

909 g of the yoghurt base prepared in example 1 were dry blended with 800 g sucrose and then dispersed in 8291 g of water at 45-50 °C, pH was adjusted to 4.0 by addition of citric acid, and the preparation mixed for 10 minutes using a Silverston ®blender model L4R at a rotating speed of 3000 rpm.

### 2. Reference sample

879 g of reference yoghurt powder prepared under identical conditions as in example 1 except for the addition of pectin was dry blended with 28 g of high ester Grindsted® AMD 783 and 800 g sucrose and then dispersed in 8291 g of water at 45-50 °C, pH was adjusted to 4.0 by addition of citric acid, and the preparation mixed for 10 minutes using a Silverston ®blender model L4R at a rotating speed of 3000 rpm.

The test sample and the reference sample consisted of the same components, had the same type and content of pectin and differed only by the fact that pectin had been added to the yoghurt base prior to drying for the test sample, and after the drying for the reference sample. The test sample and the reference sample were analysed after 7 day's of storage at 4 °C and the results are shown below in table 1. Viscosity was measured by a LVT Brookfiled® viscosimeter at 30 rpm with S 160 spindle, sediment was measured as deposit after 30 minutes of centrifugation at 1200 rpm in a Heraus® centrifuge, mean particle size was measured on a Malvern®mastersizer.

| Evaluation criteria | Test sample | Reference sample |
|---|---|---|
| PH value | 4.0 | 4.0 |
| Viscosity | 15 cP | 35 cP |
| Sediment | 4.2 % | 14.2 % |
| Mean particle size | 7.5 µm | 14.4 µm |
| Aspect after 7 day's at 4 °C | No phase separation or sediments visible | Two phases formed with a clear whey supernatant on the upper half of the container and sediment in the lower half. |

### EXAMPLE 3

### 1. Test sample

17.6 g of the yoghurt base prepared in example 1 were dry blended with 16 g sucrose and poured in a 250 ml transparent bottle. 166 g of tap water at 20°C where then added to the bottle, which was shaken vigorously by hand for exactly 30 seconds.

### 2. Reference sample

The same procedure was repeated by dry-blending 17 g of reference yogurt powder mentioned in example 2, 0.56 g of high ester Grindsted® AMD 783 pectin and 16 g of sucrose, pouring the blend in a 250 ml transparent bottle, and then adding 166 ml of tap water at 20°C and shaking.

Addition of water and shaking was performed simultaneously for test and reference sample. The bottles were then let to rest at room temperature. After 10 minutes, it was observed that the test sample was still homogenous, with no trace of phase separation, whereas in reference sample, a flocculation phenomenon was clearly visible. After 30 minutes, the test sample was still homogenous, and in the reference sample, 2 distinct phases where visible, with a clear phase on the upper third of the liquid, and an opaque white phase on the 2 lower thirds of the liquid.

## Claims

1. A protein powder composition comprising from 3 to 30 % pectin (weight/weight of the protein content), the pectin having a degree of esteriflcation ≥ 50%, wherein, in said composition, from 3 to 30% pectin (weight/weight of the protein content) Is adsorbed to a protein base.

2. The protein powder composition according to claim 1, wherein from about 5 to about 15% pectin (weight/weight of the protein content) is adsorbed to a protein base.

3. The protein powder composition according to any of the preceding claims, wherein the protein powder composition has a pH below 7.

4. The protein powder composition according to any of the preceding claims, wherein the protein powder composition may be reconstituted to form a protein liquid with an increased stability.

5. The protein powder composition according to claim 4, wherein the reconstituted protein liquid remains homogenous with a viscosity below 50 mPAs at a 3% protein concentration.

6. The protein powder composition according to claim 5, wherein the reconstituted protein liquid remains homogenous with a viscosity below 25 mPAs at a 3% protein concentration.

7. The protein powder composition according to any of the preceding claims, wherein the esterification degree of pectin is ≥ 60%.

8. The protein powder composition according to claim 7, wherein the esterification degree of pectin is ≥ 70%.

9. The protein powder composition according to any of the preceding claims, wherein the protein base is selected from the group consisting of meats, milks, juices, soyas, oats, wheys, rices, walnuts, peanuts, coconuts, yoghurts or a combination thereof.

10. A protein liquid reconstituted from the protein powder composition according to any of the preceding claims, the protein liquid being selected from the group consisting of soups, dressings, milk drinks, milk juice drinks, buttermilk drinks, sour cream drinks, whey juice drinks, oat drinks, juice drinks and soya drinks or a combination thereof.

11. A process for the preparation of a protein powder composition which may be reconstituted to form a protein liquid comprising the steps of;
a) providing at least one pectin source,
b) providing at least one protein base,
c) mixing said pectin source(s) with said protein base(s) to produce a protein powder composition,
d) homogenising said protein powder composition and
e) drying said protein powder composition.

12. The process according to claim 11, wherein the steps of homogenisation and drying is done in one step.

13. The process according to any of the claims 11-12, wherein the pectin source(s) is blended with another component such as sucrose.

14. The process according to any of the claims 11-13, wherein an additional step of dissolving the pectin source(s) in an aqueous media prior to step c) us used.

15. The process according to claim 14, wherein the aqueous media is selected from the group consisting of water and milk.

16. The process according to claim 15, wherein the pectin source in b) is provided to a content from about 3 to about 30 % (weight/weight) of the protein content.

17. The process according to claim 16, wherein the pectin source in b) is provided to a content from about 5 to about 15 % (weight/weight) of the protein content

18. The process according to any of claims 11-17, wherein the pectin source in a) has a degree of esterification ≥ 50 %.

19. The process according to claim 18, wherein the pectin source in a) has a degree of esterification ≥ 60 %.

20. The process according to claim 19, wherein the pectin source in b) has a degree of esterification ≥ 70 %.

21. The process according to any of claims 11-20, wherein drying is selected from the group consisting of fluid bed drying, freeze-drying, spray-drying or drum-drying or a combination thereof.

22. The process according to any of claims 11-21, wherein the protein base is selected from the group consisting of meats, milks, juices, soyas, oats, wheys, yoghurts or a combination thereof.

23. A protein powder composition produced by the process according to any of the claims 11-22.

## Patentansprüche

1. Pulverförmige Protcinzusammensetzung, die 3 bis 30% Pektin (Gew.∼%, bezogen auf den Proteingehalt) enthält, wobei das Pektin einen Veresterungsgrad von ≥ 50% aufweist, und wobei 3 bis 30% des Pektins (Gew.∼%, bezogen auf den Proteingehalt) in der genannten Zusammensetzung an eine Proteingrundlage adsorbiert sind.

2. Pulverförmige Proteinzusammensetzung nach Anspruch 1, bei welcher etwa 5 bis etwa 15% des Pektins (Gew.-%, bezogen auf den Proteingehalt) an eine Proteingrundlage adsorbiert sind.

3. Pulverförmige Proteinzusammensetzung nach einem der vorhergehenden Ansprüche, wobei die pulverförmige Proteinzusammensetzung einen pH∼ Wert geringer als 7 aufweist.

4. Pulverförmige Proteinzusammensetzung nach einem der vorhergehenden Ansprüche, wobei von der pulverförmigen Proteinzusammensetzung wieder ein flüssiges Protein herstellbar ist, das eine erhöhte Stabilität aufweist.

5. Pulverförmige Proteinzusammensetzung nach Anspruch 4, wobei die wiederhergestellte Proteinflüssigkeit mit einer Proteinkonzentration von 3% bei einer Viskosität unterhalb von 50 mPas homogen bleibt.

6. Pulverförmige Proteinzusammensetzung nach Anspruch 5, wobei die wiederhergestellte Proteinflüssigkeit mit einer Proteinkonzentration von 3% bei einer Viskosität unterhalb von 25 mPas homogen bleibt.

7. Pulverförmige Proteinzusammensetzung nach einem der vorhergehenden Ansprüche, wobei der Veresterungsgrad des Pektins 60% beträgt.

8. Pulverförmige Proteinzusammensetzung nach Anspruch 7, wobei der Veresterungsgrad des Pektins ≥ 70% beträgt.

9. Pulverförmige Proteinzusammensetzung nach einem der vorhergehenden Ansprüche, wobei die Proteingrundlage ausgewählt ist aus der Gruppe bestehend aus Fleisch, Milch, Säften, Soja, Hafer, Molke, Reis, Walnüssen, Erdnüssen, Kokosnüssen, Yoghurt oder Kombinationen davon.

10. Flüssiges Protein, das aus der pulverförmigen Proteinzusammensetzung nach einem der vorhergehenden Ansprüche wiederhergestellt worden ist, wobei das flüssige Protein ausgewählt ist aus der Gruppe bestehend aus Suppen, Soßen, Milchgetränken, Milch-Saft-Getränken, Buttermilch-Getränken, Sauerrahm-Getränken, Molke-Saft-Getränken, Hafergetränken, Saftgeträn∼ ken und Sojagetränken oder Kombinationen davon,

11. Verfahren zur Herstellung einer pulverförmigen Proteinzusammensetzung, von weicher wieder ein flüssiges Protein hergestellt werden kann, das folgende Schritte umfaßt:
a) Bereitstellen von zumindest einer Pektinquelle,
b) Bereitstellen von zumindest einer Proteingrundlage,
c) Mischen der genannten Pektinquelle(n) mit der oder den genannten Proteingrundlage(n),
d) Homogenisieren der genannten pulverförmigen Proteinzusammensetzung
und
e) Trocknen der genannten pulverförmigen Proteinzusammensetzung.

12. Verfahren nach Anspruch 11, bei dem die Schritte des Homogenisierens und des Trocknens in einem Schritt durchgeführt werden.

13. Verfahren nach einem der Ansprüche 11-12, bei dem die Pektinquelle(n) mit einer anderen Komponente, wie Saccharose, vermischt wird (oder werden).

14. Verfahren nach einem der Ansprüche 11-13, bei dem vor Schritt c) ein zusätzlicher Schritt des Lösens der Pektinquelle(n) in einem wäßrigen Medium angewendet wird.

15. Verfahren nach Anspruch 14, bei dem das wäßrige Medium ausgewählt ist aus der Gruppe bestehend aus Wasser und Milch.

16. Verfahren nach Anspruch 15, bei dem die Pektinquelle in b) bis zu einem Gehalt von etwa 3 bis etwa 30 Gew.-%, bezogen auf den Proteingehalt, bereitgestellt wird.

17. Verfahren nach Anspruch 16, bei dem die Pektinquelle in b) bis zu einem Gehalt von etwa 5 bis etwa 15 Ges.-%, bezogen auf den Proteingehalt, bereitgestellt wird.

18. Verfahren nach einem der Ansprüche 11-17, bei dem die Pektinquelle in a) einen Veresterungsgrad von ≥ 50% aufweist.

19. Verfahren nach Anspruch 18, bei dem die Pektinquelle in a) einen Veresterungsgrad von ≥ 60% aufweist.

20. Verfahren nach Anspruch 19, bei dem die Pektinquelle in a) einen Veresterungsgrad von ≥ 70% aufweist.

21. Verfahren nach einem der Ansprüche 11-20, bei dem das Trocknen ausgewählt ist aus der Gruppe bestehend aus Fließbeittrocknen, Gefriertrocknung, Sprühtrocknen oder Trommeltrocknen oder einer Kombination davon.

22. Verfahren nach einem der Ansprüche 11-21, bei dem die Proteingrundlage ausgewählt ist aus der Gruppe bestehend aus Fleisch, Milch, Säften, Soja, Hafer, Molke, Yoghurt oder einer Kombination davon.

23. Pulverförmige Proteinzusammensetzung, welche nach dem Verfahren nach einem der vorhergehenden Anspruche 11-22 hergestellt worden ist.

## Revendications

1. Composition pulvérulente protéique comprenant de 3 à 30% de pectine (en poids/poids de la teneur en protéine), la pectine ayant un degré d'estérification ≥ 50%, dans laquelle, dans ladite composition, de 3 à 30 % de pectine (en poids/poids de la teneur en protéine) sont adsorbés sur une base protéique.

2. Composition pulvérulente protéique selon la revendication 1, dans laquelle d'environ 5 à environ 15 % de pectine (en poids/poids de la teneur protéique) sont adsorbés sur une base protéique.

3. Composition pulvérulente protéique selon l'une quelconque des revendications précédentes, dans laquelle la composition pulvérulente protéique a un pH inférieur à 7.

4. Composition pulvérulente protéique selon l'une quelconque des revendications précédentes, dans laquelle la composition pulvérulente protéique peut être reconstituée pour former un liquide protéique ayant une stabilité accrue.

5. Composition pulvérulente protéique selon la revendication 4, dans laquelle le liquide protéique reconstitué reste homogène avec une viscosité inférieure à 50 mPas à une concentration de protéine de 3 %.

6. Composition pulvérulente protéique selon la revendication 5, dans laquelle le liquide protéique reconstitué reste homogène avec une viscosité inférieure à 25 mPas à une concentration de protéine de 3 %.

7. Composition pulvérulente protéique selon l'une quelconque des revendications précédentes, dans laquelle le degré d'estérification de la pectine est ≥ 60 %.

8. Composition pulvérulente protéique selon la revendication 7, dans laquelle le degré d'estérification de la pectine est ≥ 70 %.

9. Composition pulvérulente protéique selon l'une quelconque des revendications précédentes, dans laquelle la base protéique est choisie dans le groupe constitué de viandes, de laits, de jus, de sojas, d'avoines, de petit-lait, de riz, de noix, d'arachides, de noix de coco, de yaourts ou d'une combinaison correspondante.

10. Liquide protéique reconstitué à partir de la composition pulvérulente protéique selon l'une quelconque des revendications précédentes, le liquide protéique étant choisi dans le groupe constitué de soupes, préparations, boissons au lait, boissons au lait et jus, boissons au babeurre, boissons à la crème acide, boissons au jus de petit-lait, boissons à base d'avoine, boissons à base de jus, et boissons à base de soja ou une combinaison correspondante.

11. Procédé pour la préparation d'une composition pulvérulente protéique, qui peut être reconstituée pour former un liquide protéique comprenant les étapes consistant à :
a) fournir au moins une source de pectine,
b) fournir au moins une base protéique,
c) mélanger ladite (lesdites) source(s) de pectine avec ladite (lesdites) base(s) protéique(s) pour produire une composition pulvérulente protéique,
d) homogénéiser ladite composition pulvérulente protéique et
e) sécher ladite composition pulvérulente protéique.

12. Procédé selon la revendication 11, dans lequel les étapes d'homogénéisation et de séchage sont effectuées en une seule étape.

13. Procédé selon l'une quelconque des revendications 11-12, dans lequel la (les) source(s) de pectine est (sont) mélangée(s) à un autre composant comme le saccharose.

14. Procédé selon l'une quelconque des revendications 11-13, dans lequel une étape additionnelle de dissolution de la (des) source(s) de pectine dans un milieu aqueux avant l'étape c) est utilisée.

15. Procédé selon la revendication 14, dans lequel le milieu aqueux est choisi dans le groupe constitué d'eau et de lait.

16. Procédé selon la revendication 15, dans lequel la source de pectine en b) est fournie à une teneur d'environ 3 à environ 30 % (en poids) de la teneur protéique.

17. Procédé selon la revendication 16, dans lequel la source de pectine en b) est fournie à une teneur d'environ 5 à environ 15 % (en poids) de la teneur protéique.

18. Procédé selon l'une quelconque des revendications 11-17, dans lequel la source de pectine en a) a un degré d'estérification ≥ 50 %.

19. Procédé selon la revendication 18, dans lequel la source de pectine en a) a un degré d'estérification ≥ 60 %.

20. Procédé selon la revendication 19, dans lequel la source de pectine en b) a un degré d'estérification ≥ 70 %.

21. Procédé selon l'une quelconque des revendications 11-20, dans lequel le séchage est choisi dans le groupe constitué d'un séchage sur lit fluidisé, d'une lyophilisation, d'un séchage par vaporisation, ou d'un séchage en tambour ou une combinaison correspondante.

22. Procédé selon l'une quelconque des revendications 11-21, dans lequel la base protéique est choisie dans le groupe constitué de viandes, de laits, de jus, de sojas, d'avoines, de petit-lait, de yaourts ou une combinaison correspondante.

23. Composition pulvérulente protéique produite par le procédé selon l'une quelconque des revendications 11-22.
